# EUROPÄISCHE PATENTSCHRIFT

(11) **EP 4 484 253 B1**
(45) Veröffentlichungstag und Bekanntmachung des Hinweises auf die Patenterteilung: **26.11.2025**
(21) Anmeldenummer: 24165028.2
(22) Anmeldetag: 21.03.2024
(51) Int. Cl.: B62B 3/00, B62B 5/00, B62B 5/06

(54) **TRANSPORTWAGEN**
TRANSPORT TROLLEY
CHARIOT DE TRANSPORT

(30) Priorität: 26.06.2023 DE 202023103513 U
(43) Veröffentlichungstag der Anmeldung: 01.01.2025
(73) Patentinhaber: Wanzl GmbH & Co. KGaA, 89340 Leipheim (DE)
(72) Erfinder: Kotter, Lukas, 89331 Burgau (DE); Ott, Sebastian, 89297 Roggenburg (DE); Wiedemann, Peter, 87757 Derndorf (DE)

(56) Entgegenhaltungen:
- EP-B1- 2 236 391
- DE-B4- 102013 101 494
- DE-C2- 4 319 516
- US-B2- 8 328 226

## Beschreibung

Die Erfindung bezieht sich auf einen Transportwagen mit einer beispielsweise durch eine Rahmen- oder Plattenstruktur gebildeten Wagenbasis an welche jeweils um vertikale Achsen lenkbar ausgebildete Lenkrollen angebunden sind, sowie einer Bockrolleneinrichtung mit wenigstens einer nicht-lenkbaren und in Bezug auf die Wagenbasis in einer "Geradeaus-Ausrichtung" ausgerichteten Bockrolle, wobei diese Bockrolle aus einer Passivstellung in eine Aktivstellung verlagerbar ist, in welcher die Bockrolle unter Generierung einer Seitenführungswirkung eine die Lenkrollen tragende Bodenfläche kontaktiert.

Derartige Transportwagen finden insbesondere Anwendung zur Abwicklung von innerbetrieblichem Waren- und Materialtransfer insbesondere für Versand-, Lager-, Bearbeitungs-, Behandlungs- und Montagezwecke und können über Deichseln zu einem Wagenzug gekoppelt werden. Diese Transportwagen werden üblicherweise auf ebenen und tragfähigen Bodenflächen, insbesondere Hallenböden eingesetzt.

Ein Transportwagen der oben genannten Art ist aus DE 10 2013 014 099 A1 bekannt. Dieser Transportwagen umfasst ein Paar von Bockrollen, die in etwa in den Spuren der lenkbaren Rollen dieses Transportwagens laufen und über eine Wippe gemeinsam anhebbar und absenkbar sind.

Aus EP 2 236 391 B1 ist ein weiterer Transportwagen mit Lenkrollen sowie einem Paar von Bockrollen bekannt. Die Bockrollen laufen auch hier im wesentlichen in den Spuren der Lenkrollen und sind jeweils an eine Wippe angebunden und über diese Wippen vertikal verlagerbar. Die Anordnung umfasst eine Einstelleinrichtung über welcher der Anpressdruck wenigstens einer der Bockrollen auf eine Lauffläche einstellbar ist. Das Heben und Senken der Bockrollen erfolgt über eine Exzentermechanik die mit einer Deichsel gekoppelt ist. Die der Deichsel benachbarten Lenkrollen sind über eine Pedaleinrichtung hinsichtlich ihrer Lenkbarkeit arretierbar.

Der Erfindung liegt die Aufgabe zugrunde, einen Transportwagen der oben beschriebenen Art mit vier lenkbar ausgebildeten Lenkrollen zu schaffen, der in vorteilhafter Weise in einem ersten Fahrmodus sowie in einem zweiten Fahrmodus betreibbar ist, wobei in jenem ersten Fahrmodus die Bockrolle von einer Fahrbahn abgehoben und in jenem zweiten Fahrmodus auf die Fahrbahn abgesenkt ist.

Diese Aufgabe wird erfindungsgemäß nach Anspruch 1 gelöst, durch einen Transportwagen, mit:
- einer Wagenbasis,
- einer Lenkrollenanordnung mit wenigstens vier in den jeweiligen Eck-nahen Bereichen der Wagenbasis angeordneten und die Wagenbasis rollfähig tragenden Lenkrollen, die jeweils um im wesentlichen vertikale Achsen lenkbar sind,
- einer Deichseleinrichtung, die mit der Wagenbasis gekoppelt ist und aus einer Vertikalausrichtung in eine Horizontalausrichtung verbringbar ist,
- einer Bockrolleneinrichtung mit wenigstens einer nicht lenkbar ausgebildeten Bockrolle,
- einer Verlagerungsmechanik, zur Verlagerung der Bockrolle zwischen einer Passivposition in welcher die Bockrolle von einer Fahrbahnfläche abgehoben ist und einer Aktivposition, in welcher die Bockrolle auf jener Fahrbahnfläche aufsitzt, und
- einer Arretiereinrichtung zur Arretierung wenigsten einer der Lenkrollen in einer, für eine Geradeausfahrt geeigneten Ausrichtung,
- wobei die Arretiereinrichtung und die Verlagerungsmechanik miteinander derart gekoppelt sind, dass in der Passivposition der Bockrolle die Arretiereinrichtung die ihr zugeordnete Lenkrolle unlenkbar festlegt.

Dadurch wird es auf vorteilhafte Weise möglich, einen Transportwagen zu schaffen, bei welchem für den innerbetrieblichen Warentransport vorteilhaft zwischen zwei unterschiedlichen Fahrmodi gewechselt werden kann wobei ein Einsatz im Routenzug, sowie ein manuelles Rangieren des Transportwagens durch den Anwender ermöglicht wird.

In dem Fahrmodus "Routenzug" sind dabei zwei Lenkrollen lenkbar freigegeben und zwei Lenkrollen unlenkbar arretiert und fungieren als Bockrollen. Die eigentliche Bockrolle ist in diesem Fahrmodus abgehoben und damit passiv. Im Fahrmodus "Normalbetrieb" sind die vier Lenkrollen um ihre vertikalen Lenkachsen frei lenkbar und die Bockrolle ist auf die Bodenfläche abgesenkt und befindet sich damit in einer Aktivstellung und generiert eine Seitenführungswirkung.

Durch die erfindungsgemäße Herangehensweise vereinfachen sich für den Wechsel zwischen den Fahrmodi bislang erforderliche Einstellarbeiten. Durch das erfindungsgemäße Konzept können die für den sicheren Betrieb des Transportwagens geforderten Fahrwerksmerkmale der Fahrmodi sicher eingehalten werden, was bislang durch ein manuelles Einstellen nicht gewährleistet werden konnte.

Bevorzugte Ausführungsbeispiele werden in den abhängigen Ansprüchen definiert.

Gemäß einem besonderen Aspekt der vorliegenden Erfindung erfolgt eine Nutzung von Kräften die sich bei einem Beschleunigungsvorgang im Routenzug der insbesondere durch ein Zugfahrzeug veranlasst werden kann, ergeben. Die mechanische Einkoppelung der an der Deichsel angreifenden Kräfte in die Verlagerungsmechanik kann durch Einsatz einer beweglichen Kupplung oder wahlweise auch einer längsverlagerbar beweglichen Deichsel bewerkstelligt werden. Es wird dann über die lineare Bewegung, insbesondere die Bewegungsdynamik des Wagenzuges der Fahrmoduswechsel initiiert. Die Betätigungskraft der den Fahrmodus festlegenden Mechanik wird bei dem oben beschriebenen Ansatz durch das Zugfahrzeug bereitgestellt. Die Mechanik kann Dämpfungs- und Federelemente umfassen, so dass sich für den Vorgang der Bockrollenverlagerung eine hinreichende Sanftheit ergibt.

Die Erfindung bietet optimale Fahrwerkseigenschaften, für den jeweiligen Fahrmodus oder Betriebszustand aufwendige Einstellarbeiten entfallen. Die Erfindung bietet damit ein verbessertes Sicherheitskonzept, indem einer Fehlbedienung durch den Anwender entgegengetreten wird.

Alternativ zu der Nutzung von an der Deichsel oder einer an der Deichsel vorgesehenen Kupplung in Fahrtrichtung angreifenden Kräften ist es auch möglich, die Gesamtmechanik so zu realisieren, dass eine Nutzung der Verlagerung der Deichsel aus einer vertikalen Ausrichtung in eine horizontale Ausrichtung für eine Mechanik zum Liften der Bockrolle und zum gleichzeitigen Feststellen der Ausrichtung zweier Lenkrollen erfolgt. Diese Mechanik kann insbesondere einen Seilzug, Exzenter, Zahnräder, Hebel, und/oder Schubstangen umfassen.

Gemäß einer besonders vorteilhaften Ausführungsform der Erfindung sind die Arretiereinrichtung und die Verlagerungsmechanik miteinander derart gekoppelt, dass in der Aktivposition der Bockrolle die Arretiereinrichtung die ihr zugeordnete Lenkrolle lenkbar freigibt. Die Verlagerungsmechanik und die Arretiereinrichtung sind dabei vorzugsweise mechanisch, insbesondere über ein Gestänge und eine Seilzugmechanik miteinander gekoppelt.

Die Arretiereinrichtung kann in vorteilhafter Weise derart ausgebildet sein, dass durch diese die Lenkrollen in dem der Deichseleinrichtung abgewandten Bereich der Wagenbasis festlegbar sind.

Gemäß einem besonderen Aspekt der vorliegenden Erfindung ist vorzugsweise eine Spanneinrichtung vorgesehen, zum Vorspannen der Verlagerungsmechanik in einen Zustand der Aktivposition mit abgesenkter Bockrolle wobei zudem eine Rückholeinrichtung vorgesehen ist, zum Zurückholen der Bockrolle aus der Aktivposition in die Passivposition.

Die Rückholeinrichtung kann wie oben bereits angegeben kinematisch mit der Deichsel gekoppelt werden, derart dass die Rückholeinrichtung nach Maßgabe einer Verlagerung der Deichsel relativ zur Wagenbasis betätigt wird.

Die Bockrolleneinrichtung kann derart realisiert werden, dass diese eine zentral angeordnete Bockrolle umfasst. Diese Bockrolle befindet sich dann vorzugsweise im Zentrumsbereich eines durch die Aufstandspunkte der Lenkrollen definierten Rechtecks.

Die Verlagerungsmechanik kann in vorteilhafter Weise so gestaltet sein, dass diese eine als Wippe oder Lenker ausgebildete Radaufhängungseinrichtung umfasst. Die Wippe oder der Lenker kann als Längslenker oder gemäß einem weiteren besonderen Aspekt der vorliegenden Erfindung als Querlenker ausgebildet sein.

Die Rückholeinrichtung kann in vorteilhafter Weise derart realisiert sein, dass durch ein Schwenken der Deichseleinrichtung aus der horizontalen Ausrichtung in die vertikale Ausrichtung die Rückholmechanik der Bockrolle und die Arretiereinrichtung der Lenkrollen betätigt werden.

Alternativ zu der der kombinierten Betätigung der Rückholeinrichtung und der Arretiereinrichtung durch ein Ab- und Aufklappen der Deichsel kann die Mechanik auch so gestaltet sein, dass die Rückholeinrichtung durch transversale Verlagerung der Deichseleinrichtung oder durch Kräfte betätigt wird, die an einer von der Deichseleinrichtung getragenen Kupplungseinrichtung in Deichselzugrichtung angreifen.

Die Rückholeinrichtung kann so aufgebaut werden, dass die in dieser wirksamen Kräfte durch mechanische Glieder umfassend Exzenter und/oder Zahnräder und/oder Hebel und/oder Schubstangen und oder Zugmittel geführt werden, die letztlich mit der Deichsel kinematisch gekoppelt sind. Im Falle des Einsatzes von Zugmitteln können diese durch einen Seilzug gebildet werden. Dieser Seilzug kann ein frei über eine Umlenkeinrichtung, insbesondere Umlenkführung, Umlenkrollen oder Umlenkstützheben geführtes Seil umfassen. Der Seilzug kann auch in der Art eines Bowdenzuges gestaltet sein, bei welchem das Zugseil in einem flexiblen und axial druckfesten Führungsmantel geführt ist. Auch eine fluidmechanische, insbesondere hydraulische Koppelung der Rückholmechanik mit der Deichseleinrichtung oder einer Kupplungseinrichtung ist möglich.

Die Spanneinrichtung ist vorzugsweise derart ausgelegt ist, dass die Bodenaufstandskraft der Bockrolle nahezu der Leergewichtskraft des Transportwagens entspricht. Hierdurch wird erreicht, dass die Lenkrollen auch in unbeladenem Zustand des Transportwagens Bodenkontakt halten. Weiterhin ist vorzugsweise der maximale Ausfahrweg der Bockrolle begrenzt, so dass die Bockrolle nicht übermäßig tief unter eine von den Lenkrollen definierte Ebene vordringen und den Wagen vom Boden abheben kann.

Die Bockrolle ist vorzugsweise hinsichtlich des Bereifungswerkstoffes und der Profilierung derart ausgebildet, dass diese unter Wirkung der Bodenaufstandskraft eine hohe Seitenführungskraft generiert.

Weitere Einzelheiten und Merkmale der Erfindung ergeben sich aus der nachfolgenden Beschreibung in Verbindung mit der Zeichnung. Es zeigt:
- **Figur 1**: Eine perspektivische Darstellung eines erfindungsgemäßen Transportwagens bei welchem die zur Verlagerung einer zentralen Bockrolle sowie eine zur Verriegelung deichselentfernter Lenkrollen vorgesehene Arretiereinrichtung synchron durch eine Deichseleinrichtung des Transportwagens betätigt werden;
- **Figur 2**: Eine perspektivische Darstellung des Transportwagens nach Figur 1 mit Blick auf dessen Bockrollen- und Arretiermechanik von unten;
- **Figur** 3: Eine Seitenansicht des Transportwagens in einem Betriebsmodus mit abgesenkter zentraler Bockrolle sowie frei lenkbaren Lenkrollen;
- **Figur 4**: Eine perspektivische Darstellung des erfindungsgemäßen Transportwagens mit Blick auf dessen von der Deichsel beabstandeten Heckbereich;
- **Figur 5**: Eine Detail-Darstellung des erfindungsgemäßen Transportwagens in einem Betriebsmodus mit angehobener Bockrolle und abgesenkter Deichsel;
- **Figur 6**: Eine Skizze zur Veranschaulichung einer alternativen Rückholmechanik für die Bockrolle die durch Zugkräfte betätigt wird die an einer Deichsel oder einer Kupplung der Deichsel angreifen.

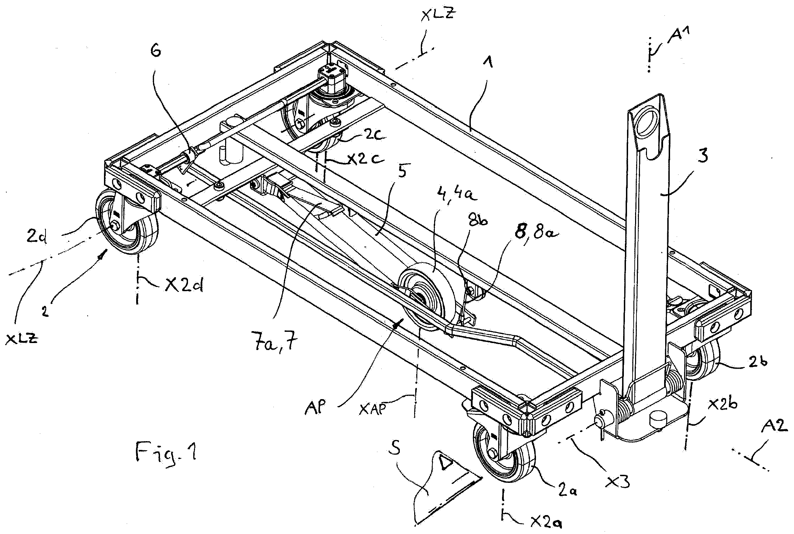

Die Darstellung nach Figur 1 zeigt einen erfindungsgemäßen Transportwagen, mit einer Wagenbasis 1 die hier beispielhaft als Vierkantrohr-Rahmen ausgebührt ist, einer Lenkrollenanordnung 2 mit wenigstens vier in den jeweiligen Eck-nahen Bereichen der Wagenbasis 1 angeordneten und die Wagenbasis 1 rollfähig tragenden Lenkrollen 2a, 2b, 2b, 2c, die jeweils um im wesentlichen vertikale Achsen X2a, X2b, X2c, X2d lenkbar sind sowie mit einer Deichseleinrichtung 3, die mit der Wagenbasis 1 beweglich gekoppelt ist und aus der hier gezeigten einer Vertikalausrichtung A1 in eine Horizontalausrichtung A2 verbringbar ist.

Der Transportwagen umfasst eine Bockrolleneinrichtung 4 mit wenigstens einer nicht lenkbar ausgebildeten Bockrolle 4a sowie eine Verlagerungsmechanik 5, zur Verlagerung der Bockrolle 4a zwischen einer Passivposition PP in welcher die Bockrolle von einer Fahrbahnfläche S abgehoben ist und einer Aktivposition AP, in welcher die Bockrolle 4a wie hier gezeigt auf jener Fahrbahnfläche S aufsitzt. Der Transportwagen umfasst eine Arretiereinrichtung 6 zur Arretierung wenigsten einer der Lenkrollen 2c, 2d in einer - wie hier gezeigt - für eine Geradeausfahrt geeigneten Ausrichtung.

Der erfindungsgemäße Transportwagen zeichnet sich dadurch aus, dass die Arretiereinrichtung 6 und die Verlagerungsmechanik 5 miteinander derart gekoppelt sind, dass in der Passivposition der Bockrolle 4a die Arretiereinrichtung 6 die ihr zugeordnete Lenkrolle 2c, 2d unlenkbar in einer für eine Geradeausfahrt geeigneten Ausrichtung festlegt. Zudem sind die Arretiereinrichtung 6 und die Verlagerungsmechanik 5 miteinander derart gekoppelt, dass in der Aktivposition AP der Bockrolle 4a die Arretiereinrichtung 6 die ihr zugeordneten Lenkrollen 2c, 2d lenkbar freigibt. Die Verlagerungsmechanik 5 und die Arretiereinrichtung 6 sind hierzu mechanisch gekoppelt indem diese mit einer durch die Deichsel 3 bereitgestellten oder mit dieser gekoppelten Struktur gemeinsam betätigt werden.

Bei dem hier dargestellten Ausführungsbeispiel ist die Arretiereinrichtung 6 derart ausgebildet ist, dass durch diese die Lenkrollen 2c, 2d d.h. jene Lenkrollen die den der Deichseleinrichtung 3 abgewandten Bereich der Wagenbasis tragen, schaltbar festlegbar sind. In arretiertem Zustand können hierbei die Lenkrollen 2c, 2d nicht mehr um ihre vertikale ausgerichteten Lenkachsen X2c; X2d schwenken.

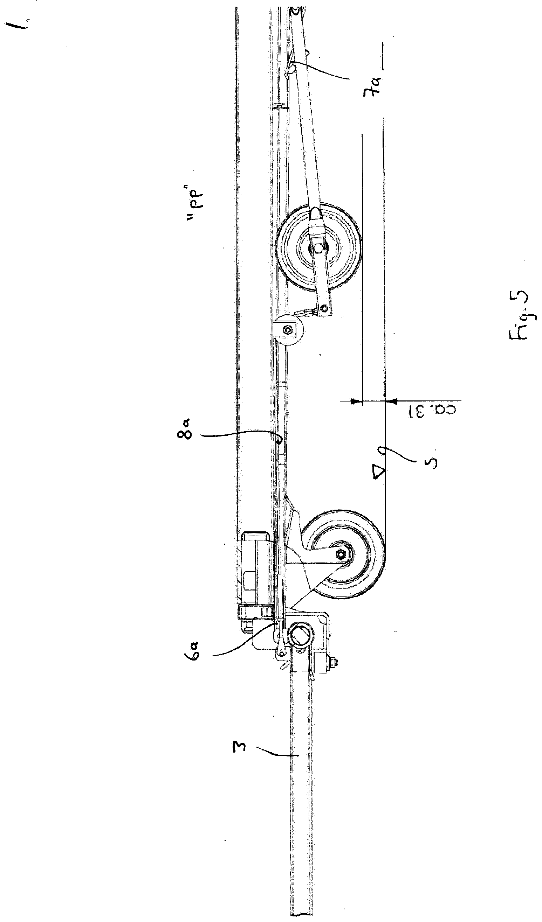

In dem erfindungsgemäßen Transportwagen ist eine hier durch eine Feder 7a gebildete Spanneinrichtung 7 vorgesehen ist, zum Vorspannen oder Drängen der Verlagerungsmechanik 5 in einen Zustand der Aktivposition AP mit abgesenkter und gegen die Bodenfläche S vertikal nach unten gedrängter Bockrolle 4a. Weiterhin ist eine Rückholeinrichtung 8 vorgesehen, zum Zurückholen der Bockrolle 4a aus der Aktivposition AP in die Passivposition PP (vgl. Fig. 5). Die Rückholeinrichtung 8 ist kinematisch mit der Deichsel 3 gekoppelt ist, derart dass die Rückholeinrichtung 8 nach Maßgabe einer Verlagerung der Deichsel 3 relativ zur Wagenbasis 1 betätigt wird.

Der hier gezeigte Transportwagen umfasst eine einzige Bockrolle 4a, die im Wesentlichen zentral zwischen den Lenkrollen 2a, 2b, 2c, 2d angeordnet ist. Die Verlagerungsmechanik 5 bildet hier eine als Wippe oder Lenker gestaltete Radaufhängungseinrichtung. Diese Wippe wird durch die Feder 7a belastet und drängt die an der Wippe gelagerte Bockrolle 4a gegen die Bodenfläche S. Die Wippe fungiert hier als Längslenker. Sie kann auch als Querlenker gestaltet sein.

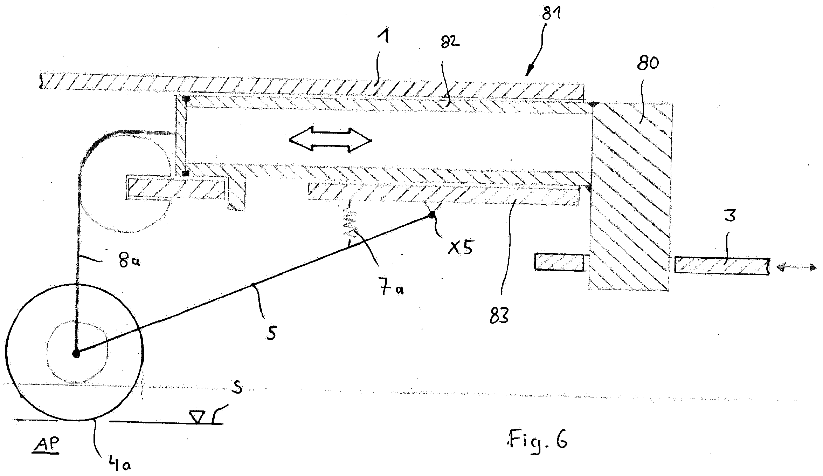

Bei dem hier gezeigten Ausführungsbeispiel wird die Rückholeinrichtung 8 durch ein Schwenken der Deichseleinrichtung 3 aus der horizontalen Ausrichtung A1 in die vertikale Ausrichtung A2 betätigt. Wie im Folgenden noch in Verbindung mit Figur 6 beschrieben werden wird, kann die Rückholeinrichtung 8 alternativ auch durch transversale Verlagerung der Deichseleinrichtung 3 oder durch Kräfte betätigt werden, die an einer von der Deichseleinrichtung 3 getragenen Kupplungseinrichtung in Deichselzugrichtung angreifen.

Die Rückholeinrichtung 8 umfasst hier ein Zugmittel, insbesondere einen Seilzug der mit der Deichsel gekoppelt ist. Der Seilzug umfasst ein Seil 8a, das über eine Umlenkeinrichtung 8b geführt ist. Der Seilzug kann alternativ auch in der Art eines Bowdenzuges gestaltet sein bei welchem das Seil 8a in einem flexiblen axial druckfesten Führungsmantel geführt ist der sich mit beiden Enden an der Wagenbasis 1 abstützt.

Die Spanneinrichtung 7 ist derart ausgelegt, dass die Bodenaufstandskraft der Bockrolle 4a nahezu der Leergewichtskraft des Transportwagens entspricht, so dass der Transportwagen auch in unbeladenem Zustand nicht durch die Bockrolle 4a hoch gestemmt wird und die Lenkrollen 2a, 2b, 2c, 2d hierbei von der Bodenfläche S abheben. Die Bockrolle 4a ist hinsichtlich Bereifungswerkstoff und Profilierung derart ausgebildet, dass diese unter Wirkung der Bodenaufstandskraft eine hohe Seitenführungskraft generiert.

Die Deichsel 3 ist mit der Wagenbasis 1 derart gekoppelt, dass die Deichsel 3 um eine Horizontalachse X3 zwischen den Positionen A1 und A2 klappbar ist. Die Horizontalachse X3 wird durch eine Gelenkanordnung definiert die ansonsten starr an die Wagenbasis 1 angebunden ist. Bei Einnahme der Aktivposition AP der Bockrolle 4a ist der Transportwagen um eine Lenkachse lenkbar, die durch das Bodenaufstandszentrum der Bockrolle 4a verläuft. Die Arretiereinrichtung 6 gibt in diesem Zustand die Lenkrollen 2c, 2d frei, so dass diese um ihre Lenkachsen X2c, X2d schwenkbar sind. Bei angehobener Bockrolle 4a nimmt die Arretiereinrichtung 6 einen Arretierzustand ein und sperrt die Lenkrollen 2c, 2d gegen eine Rotation um die Lenkachsen X2c, X2d. Die Wagenbasis 1 ist dann um einen Pol lenkbar, der auf einer durch die Rollenachsen der Lenkrollen 2c, 2d definierten Achse XLZ liegt. Die hier als Rohrstruktur ausgebildet Wagenbasis 1 kann mit einer Platte versehen sein, die auf die Rohrstruktur aufgesetzt wird.

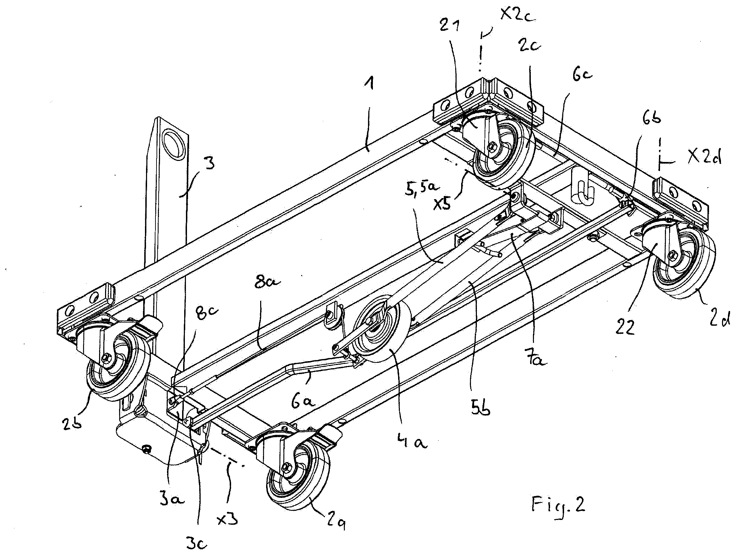

Die Darstellung nach Figur 2 zeigt insbesondere die Koppelung des Zugseiles 8a mit einem unteren Abschnitt 3a der Deichsel 3. Im Rahmen eines Abklappens der Deichsel 3 wandert ein Anbindungsgelenk 8c des Zugseiles 8a auf einer Kreisbahn um die Schwenkachse X3 der Deichsel und koppelt eine Zugkraft in das Zugseil 8a ein welche die Wippe 5 um deren Wippenachse X5 nach oben schwenkt. Dieses Schwenken der Wippe 5 erfolgt hierbei entgegen der durch die Feder 7a generierten Vorspannkraft. Die Wippe 5 umfasst zwei Lenker 5a, 5b welche die zwischen diesen aufgenommene Bockrolle 4a beidseitig führen. Die Lenker 5a, 5b sind im Bereich ihrer der Bockrolle 4a jeweils abgewandten Enden mit der Wagenbasis 1 gelenkig gekoppelt. Die Deichsel 3 bildet in ihrem unteren Abschnitt 3a auch eine Schubstangenanbindung 3c, an welche eine Schubstange 6a der Arretiereinrichtung angekoppelt ist. Durch Schwenken der Deichsel 3 wird dementsprechend die Schubstange 6a verlagert. Diese greift an einem Hebel 6b an. Durch diesen Hebel 6b wird eine Schaltwelle 6c um ihre Längsachse rotiert. Durch die Rotation der Schaltwelle 6c wird eine Mechanik betätigt durch welche die Träger 21, 22 der Lenkrollen 2b, 2c derart festgelegt werden, dass diese nicht um die Lenkachsen X2c, X2d schwenkbar sind. Die Lenkfähigkeit der Lenkrollen 2a, 2b bleibt unverändert erhalten.

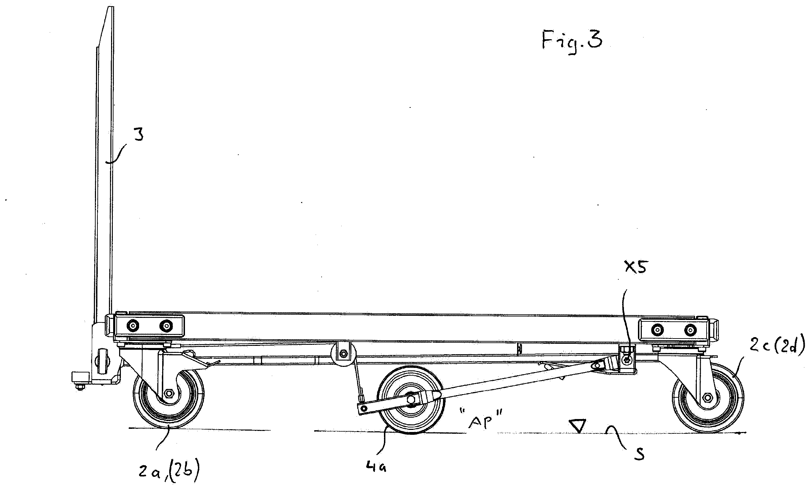

Die Darstellung nach Figur 3 zeigt eine Seitenansicht des Transportwagens zur weiteren Veranschaulichung des Aufbaus desselben. Die Bockrolle 4a befindet sich in der Aktivposition AP und sitzt auf der Rollfläche S auf. Die Deichsel 3 ist aufgeklappt. Der hier gezeigte Zustand des Transportwagens entspricht dem Normalbetriebsmodus. Alle vier Lenkrollen 2a, 2b, 2c, 2d sind frei lenkbar. Die Arretiereinrichtung 6 ist nicht aktiviert.

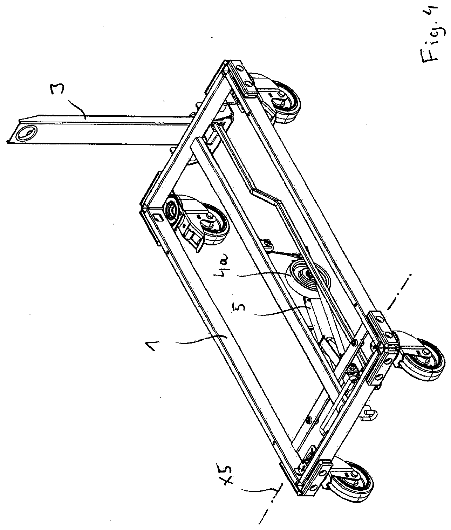

Wie aus der Darstellung nach Figur 4 ersichtlich ist hier die Wagenbasis 1 durch einen Rohrrahmen gebildet. Dieser bildet in der Draufsicht eine Rechteckstruktur. Die Bockrolle 4a befindet sich im Zentralbereich dieser Rechteckstruktur. Die Wippe 5 ist an den Rohrrahmen schwenkbewegbar angebunden. Die Schwenkachse X5 der Wippe 5 verläuft horizontal und quer zur Längserstreckung der Rechteckstruktur in dem der Deichsel 3 abgewandten Bereich des Wagens. Die vertikale Verlagerbarkeit der Bockrolle 4a kann auch durch anderweitige Radaufhängungsmechaniken erreicht werden.

Die Darstellung nach Figur 5 zeigt den Transportwagen in einem Zustand mit einer in die horizontale Ausrichtung abgeklappten Deichsel 3. Das Zugseil 8a wird hier belastet und hebt die Bockrolle 4a entgegen der durch die Feder 7a generierten Vorspannkraft vom Rollboden S ab. Der hier gezeigte Betriebszustand entspricht dem sog. Routenzug-Betriebszustand. In diesem Betriebszustand wird die hier nicht umfassend gezeigte Arretiereinrichtung 6 (vgl Fig 1) aktiv und arretiert nach Maßgabe der Position der Schubstange 6a die hinteren Lenkrollen 2c, 2d.

Die Darstellung nach Figur 6 veranschaulicht in Form einer Schemadarstellung eine Variante einer Verlagerungsmechanik, zur Verlagerung der Bockrolle 4a zwischen einer Passivposition in welcher die Bockrolle von einer Fahrbahnfläche S abgehoben ist und einer hier gezeigten Aktivposition AP, in welcher die Bockrolle 4a auf einer Fahrbahnfläche S aufsitzt. Die Verlagerungsmechanik ist hier derart ausgebildet, dass diese nach Maßgabe einer Längsverlagerung der Deichsel 3 operiert. Diese Längsverlagerung kann insbesondere im Rahmen der Beschleunigung des Transportwagens durch Angriff eines Zugfahrzeuges an der Deichsel veranlasst werden. Die Deichsel 3 ist so ausgebildet, dass diese im Rahmen des Abklappens derselben mit einem Kupplungselement 80 in Eingriff tritt und mit diesem gekoppelt wird Das Kupplungselement 80 ist an einer Führung, insbesondere einer Koaxialrohführung 81 geführt. Ein Schubelement 82 dieser Koaxialrohrführung wandert hierbei in einer Führungsumhausung 83. Das Schubelement 82 ist mit dem Zugseil 8a gekoppelt. Durch Zug an der Deichsel 3 wird das Kupplungselement 80 und damit das Schubelement 82 verlagert und das Zugseil 8a belastet. Das Zugseil 8a kann dementsprechend unter der Wirkung der Deichsel 3 die Bockrolle 4a entgegen der Spannung der Feder 7a anheben.

Es ist möglich, die Gesamtkonstruktion so zu treffen, dass durch das Schwenken der Deichsel 3 in die Horizontalstellung die Arretiereinrichtung 6 betätigt wird und durch die Längsverlagerung der Deichsel 3 in abgeklapptem Zustand die Verlagerungsmechanik der Bockrolle betätigt wird.

Es ist weiterhin möglich, an dem Transportwagen Schalt- oder Stellmittel vorzusehen, durch welche die Verlagerungsmechanik 5 unahbhängig von der Stellung der Deichsel 3 oder unabhängig von Kräften die an der Deichsel 3 angreifen in einen geforderten Zustand gebracht werden kann, so dass sich die Bockrolle 4a dann in einer abgesenkten Aktivposition oder angehobenen Passivposition befindet.

## Patentansprüche

1. Transportwagen, mit:
- einer Wagenbasis (1),
- einer Lenkrollenanordnung (2) mit wenigstens vier in den jeweiligen Eck-nahen Bereichen der Wagenbasis angeordneten und die Wagenbasis rollfähig tragenden Lenkrollen (2a-2d), die jeweils um im wesentlichen vertikale Achsen lenkbar sind,
- einer Deichseleinrichtung (3), die mit der Wagenbasis gekoppelt ist und aus einer Vertikalausrichtung in eine Horizontalausrichtung verbringbar ist,
- einer Bockrolleneinrichtung (4) mit wenigstens einer nicht lenkbar ausgebildeten Bockrolle (4a),
- einer Verlagerungsmechanik (5) zur Verlagerung der Bockrolle zwischen einer Passivposition in welcher die Bockrolle von einer Fahrbahnfläche abgehoben ist und einer Aktivposition, in welcher die Bockrolle auf jener Fahrbahnfläche aufsitzt,
**gekennzeichnet durch**
- eine Arretiereinrichtung (6) zur Arretierung wenigsten einer der Lenkrollen in einer, für eine Geradeausfahrt geeigneten Ausrichtung,
- wobei die Arretiereinrichtung (6) und die Verlagerungsmechanik (5) miteinander derart gekoppelt sind, dass in der Passivposition der Bockrolle die Arretiereinrichtung die ihr zugeordnete Lenkrolle unlenkbar festlegt.

2. Transportwagen nach Anspruch 1, **dadurch gekennzeichnet, dass** die Arretiereinrichtung und die Verlagerungsmechanik miteinander derart gekoppelt sind, dass in der Aktivposition der Bockrolle die Arretiereinrichtung die ihr zugeordnete Lenkrolle lenkbar freigibt.

3. Transportwagen nach Anspruch 1 oder 2, **dadurch gekennzeichnet, dass** die Verlagerungsmechanik und die Arretiereinrichtung mechanisch gekoppelt sind.

4. Transportwagen nach wenigstens einem der Ansprüche 1 bis 3, **dadurch gekennzeichnet, dass** die Arretiereinrichtung derart ausgebildet ist, dass durch diese die Lenkrollen in dem der Deichseleinrichtung abgewandten Bereich der Wagenbasis festlegbar sind.

5. Transportwagen nach wenigstens einem der Ansprüche 1 bis 4, **dadurch gekennzeichnet, dass** eine Spanneinrichtung vorgesehen ist, zum Vorspannen der Verlagerungsmechanik in einen Zustand der Aktivposition mit abgesenkter Bockrolle und dass eine Rückholeinrichtung vorgesehen ist, zum Zurückholen der Bockrolle aus der Aktivposition in die Passivposition.

6. Transportwagen nach Anspruch 5, **dadurch gekennzeichnet, dass** die Rückholeinrichtung kinematisch mit der Deichsel gekoppelt ist, derart dass die Rückholeinrichtung nach Maßgabe einer Verlagerung der Deichsel relativ zur Wagenbasis betätigt wird.

7. Transportwagen nach wenigstens einem der Ansprüche 1 bis 6, **dadurch gekennzeichnet, dass** die Bockrolleneinrichtung eine zentral angeordnete Bockrolle umfasst.

8. Transportwagen nach wenigstens einem der Ansprüche 1 bis 7, **dadurch gekennzeichnet, dass** die Verlagerungsmechanik eine als Wippe oder Lenker ausgebildete Radaufhängungseinrichtung umfasst.

9. Transportwagen nach wenigstens einem der Ansprüche 1 bis 8, wenn abhängig von Anspruch 5, **dadurch gekennzeichnet, dass** die Rückholeinrichtung durch ein Schwenken der Deichseleinrichtung aus der horizontalen Ausrichtung in die vertikale Ausrichtung betätigt wird.

10. Transportwagen nach wenigstens einem der Ansprüche 1 bis 8, wenn abhängig von Anspruch 5, **dadurch gekennzeichnet, dass** die Rückholeinrichtung durch longitudinale Verlagerung der Deichseleinrichtung oder durch Kräfte betätigt wird, die an einer von der Deichseleinrichtung getragenen Kupplungseinrichtung in Deichselzugrichtung angreifen.

## Claims

1. Transport trolley, comprising:
- a trolley base (1),
- a swivel castor arrangement (2) having at least four swivel castors (2a-2d) which are arranged in the respective regions of the trolley base close to the corners, bear the trolley base in a rollable manner and are each steerable about substantially vertical axes,
- a drawbar device (3), which is coupled to the trolley base and can be brought from a vertical orientation into a horizontal orientation,
- a fixed castor device (4) having at least one fixed castor (4a) which is designed so as not to be steerable,
- a displacement mechanism (5) for displacing the fixed castor between a passive position, in which the fixed castor is lifted off a carriageway surface, and an active position, in which the fixed castor rests on said carriageway surface, **characterized by**
- an arresting device (6) for arresting at least one of the swivel castors in an orientation suitable for straight-ahead travel,
- wherein the arresting device (6) and the displacement mechanism (5) are coupled to one another in such a way that, in the passive position of the fixed castor, the arresting device fixes the swivel castor assigned to it such that it is unsteerable.

2. Transport trolley according to Claim 1, **characterized in that** the arresting device and the displacement mechanism are coupled to one another in such a way that, in the active position of the fixed castor, the arresting device releases the swivel castor assigned to it such that it is steerable.

3. Transport trolley according to Claim 1 or 2, **characterized in that** the displacement mechanism and the arresting device are mechanically coupled.

4. Transport trolley according to at least one of Claims 1 to 3, **characterized in that** the arresting device is designed in such a way that, by means of the latter, the swivel castors are fixable **in that** region of the trolley base which faces away from the drawbar device.

5. Transport trolley according to at least one of Claims 1 to 4, **characterized in that** a tensioning device is provided for pretensioning the displacement mechanism into a state of the active position with the fixed castor lowered, and **in that** a return device is provided for returning the fixed castor from the active position into the passive position.

6. Transport trolley according to Claim 5, **characterized in that** the return device is kinematically coupled to the drawbar such that the return device is actuated in accordance with a displacement of the drawbar relative to the trolley base.

7. Transport trolley according to at least one of Claims 1 to 6, **characterized in that** the fixed castor device comprises a centrally arranged fixed castor.

8. Transport trolley according to at least one of Claims 1 to 7, **characterized in that** the displacement mechanism comprises a wheel suspension device configured as a rocker or link.

9. Transport trolley according to at least one of Claims 1 to 8, if dependent on Claim 5, **characterized in that** the return device is actuated by pivoting the drawbar device from the horizontal orientation into the vertical orientation.

10. Transport trolley according to at least one of Claims 1 to 8, if dependent on Claim 5, **characterized in that** the return device is actuated by longitudinal displacement of the drawbar device or by forces which act on a coupling device, which is carried by the drawbar device, in the drawbar pulling direction.

## Revendications

1. Chariot de transport avec :
- une base (1) de chariot,
- un ensemble (2) de roulettes directrices avec au moins quatre roulettes directrices (2a - 2d) disposées dans les zones respectives de la base de wagon proches des coins et supportant la base de chariot de manière roulante, lesquelles peuvent être dirigées chacune autour d'axes sensiblement verticaux,
- un dispositif de timon (3), qui est couplé à la base de chariot et peut être amené depuis une orientation verticale dans une orientation horizontale,
- un dispositif (4) à roulette fixe avec au moins une roulette fixe (4a) réalisée de manière non dirigeable,
- un mécanisme de déplacement (5) destiné à déplacer la roulette fixe entre une position passive, dans laquelle la roulette fixe est soulevée d'une surface de voie de déplacement, et une position active, dans laquelle la roulette fixe repose sur cette surface de voie de déplacement, **caractérisé par**
- un dispositif de blocage (6) destiné à bloquer au moins une des roulettes directrices dans une orientation adaptée pour un déplacement en ligne droite,
- le dispositif de blocage (6) et le mécanisme de déplacement (5) étant couplés l'un à l'autre de telle manière que, dans la position passive de la roulette fixe, le dispositif de blocage immobilise de manière non dirigeable la roulette directrice qui lui est associée.

2. Chariot de transport selon la revendication 1, **caractérisé en ce que** le dispositif de blocage et le mécanisme de déplacement sont couplés l'un à l'autre de telle manière que, dans la position active de la roulette fixe, le dispositif de blocage libère de manière dirigeable la roulette directrice qui lui est associée.

3. Chariot de transport selon la revendication 1 ou 2, **caractérisé en ce que** le mécanisme de déplacement et le dispositif de blocage sont couplés mécaniquement.

4. Chariot de transport selon au moins l'une des revendications 1 à 3, **caractérisé en ce que** le dispositif de blocage est réalisé de telle manière que celui-ci permet d'immobiliser les roulettes directrices dans la zone de la base de chariot opposée au dispositif de timon.

5. Chariot de transport selon au moins l'une des revendications 1 à 4, **caractérisé en ce qu'**un dispositif de serrage est prévu pour précontraindre le mécanisme de déplacement dans un état de la position active avec une roulette fixe abaissée, et qu'un dispositif de retour est prévu pour ramener la roulette fixe de la position active dans la position passive.

6. Chariot de transport selon la revendication 5, **caractérisé en ce que** le dispositif de retour est couplé de manière cinématique au timon de telle manière que le dispositif de retour est actionné conformément à un déplacement du timon par rapport à la base de chariot.

7. Chariot de transport selon au moins l'une des revendications 1 à 6, **caractérisé en ce que** le dispositif à roulette fixe comprend une roulette fixe disposée de manière centrale.

8. Chariot de transport selon au moins l'une des revendications 1 à 7, **caractérisé en ce que** le mécanisme de déplacement comprend un dispositif de suspension de roue réalisé comme une bascule ou une bielle.

9. Chariot de transport selon au moins l'une des revendications 1 à 8, lorsqu'elles dépendent de la revendication 5, **caractérisé en ce que** le dispositif de retour est actionné par un pivotement du dispositif de timon depuis l'orientation horizontale dans l'orientation verticale.

10. Chariot de transport selon au moins l'une des revendications 1 à 8, lorsqu'elles dépendent de la revendication 5, **caractérisé en ce que** le dispositif de retour est actionné par un déplacement longitudinal du dispositif de timon ou par des forces, qui s'engagent sur un dispositif de couplage supporté par le dispositif de timon dans la direction de traction de timon.
